# FASCICULE DE BREVET EUROPEEN

(11) **EP 1 340 678 B1**
(45) Date de publication et mention de la délivrance du brevet: **09.08.2006**
(21) Numéro de dépôt: 03290456.7
(22) Date de dépôt: 26.02.2003
(51) Int. Cl.: B65B 7/16, B65D 77/20, B29C 65/18, B29C 65/00

(54) **Emballage étanche pour produits alimentaires**
Dichter Lebensmittelbehälter
Sealed container for food products

(30) Priorité: 27.02.2002 FR 0202480
(43) Date de publication de la demande: 03.09.2003
(73) Titulaire: Multivac Sepp Haggenmüller GmbH & Co. KG, 87787 Wolfertschwenden (DE)
(72) Inventeur: Adam, Gilles, 77600 Conches sur Gondoire (FR)
(74) Mandataire: Feldmeier, Jürgen

(56) Documents cités:
- DE-A- 2 262 115
- DE-A- 4 437 574
- US-A- 4 589 568
- US-A- 6 076 673
- US-A- 6 091 054

## Description

La présente invention concerne un emballage étanche pour produits alimentaires, et plus particulièrement un tel emballage comprenant un conteneur et un opercule soudé à un rebord périphérique du conteneur le long d'un premier cordon de soudure périphérique.

Le document DE 44 37 574 A1 décrit le soudage d'un conteneur. Il y sont divulgués des conduits réalisés par des plissures qui sont remplis par la masse de cachet lors de la fermeture de l'outil de soudage.

De tels emballages sont bien connus dans la technique.

Le conteneur est généralement réalisé en matière plastique rigide thermoformée et l'opercule en matière plastique souple.

L'emballage des produits consiste à les placer dans le conteneur, puis à mettre l'ensemble dans une enceinte dans laquelle on fait le vide, à disposer l'opercule sur les produits et sur le rebord du conteneur, éventuellement à introduire dans le conteneur un gaz inerte, et enfin à former le cordon de soudure périphérique entre le bord de l'opercule et le rebord du conteneur.

Généralement, ces opérations sont réalisées simultanément pour un ensemble de conteneurs reliés les uns aux autres par les bords extérieurs de leur rebord. Dans ce cas, les conteneurs sont détachés les uns des autres au cours d'une opération ultérieure.

Un problème se pose lorsque le produit à emballer comporte des éléments susceptibles de s'en détacher. C'est tout particulièrement le cas lorsque le produit est saupoudré d'une matière thermofusible telle que du fromage râpé.

Dans ce cas, certains de ces éléments peuvent au cours des manipulations se répandre sur le rebord du conteneur à l'emplacement où doit passer le cordon de soudure.

Ce risque est d'autant plus grand lorsque la surface supérieure du produit dépasse du plan d'ouverture du conteneur.

Il se produit alors des défauts d'étanchéité aux emplacements où le cordon de soudure chevauche un élément répandu. L'emballage doit alors être mis au rebut et son contenu recyclé, ce qui grève le coût de fabrication du produit.

La présente invention vise à pallier cet inconvénient.

Plus particulièrement, l'invention a pour but de fournir un emballage et ses moyens de fabrications, dont l'étanchéité est garantie.

A cet effet, un objet de l'invention est un emballage étanche pour produits alimentaires selon la revandication 7.

Un deuxième objet de l'invention est un outil de soudage pour la fermeture étanche d'un emballage pour produits alimentaires comprenant un conteneur et un opercule de fermeture, caractérisé par le fait qu'il comprend deux lèvres de soudage périphérique sensiblement parallèles délimitant entre elles une rainure de stockage charactérisé par le fait que des évents sont percés dans la lèvre extérieure La rainure de stockage permet la formation du réservoir périphérique précité.

Dans un mode de réalisation particulier, les lèvres de soudage sont espacées d'une distance comprise entre 2 et 10 mm, de préférence de l'ordre de 5 mm. Egalement dans un mode de réalisation particulier, la rainure a une profondeur comprise entre 0,5 et 5 mm, de préférence de l'ordre de 2 mm.

L'une au moins des lèvres de soudage peut avoir une section transversale semi-circulaire.

Une telle section favorise le fluage des éléments répandus de l'un ou l'autre côté de la ligne de soudure c'est-à-dire soit à l'extérieur de l'emballage, soit dans le réservoir périphérique, soit à l'intérieur du conteneur.

Ainsi, lorsque les soudures sont réalisées sous vide mais que l'intérieur du conteneur contient un gaz, et notamment un gaz inerte, la dépression provoquée par ces évents favorise le gonflement de l'opercule à l'intérieur de la rainure périphérique pour former le réservoir.

Un troisième objet de l'invention est un procédé de soudage pour la fermeture étanche d'un conteneur muni d'un rebord périphérique à l'aide d'un opercule, caractérisé par le fait qu'il comprend l'étape consistant à former simultanément deux cordons de soudure périphériques sensiblement parallèles entre le rebord et l'opercule.

On décrira maintenant à titre d'exemple non limitatif un mode de réalisation particulier de l'invention en référence aux dessins schématiques annexés dans lesquels :
- la figure 1 est une vue de dessus d'un emballage selon l'invention ;
- la figure 2 en est une vue de côté ;
- la figure 3 est une vue de dessous d'un outil de soudage utilisé pour la fermeture de l'emballage des figures 1 et 2 ;
- la figure 4 est une vue en coupe de cet outil selon la ligne IV-IV de la figure 3 ; et
- la figure 5 est une vue en coupe illustrant à grande échelle le détail V de la figure 4 et son mode de fonctionnement.

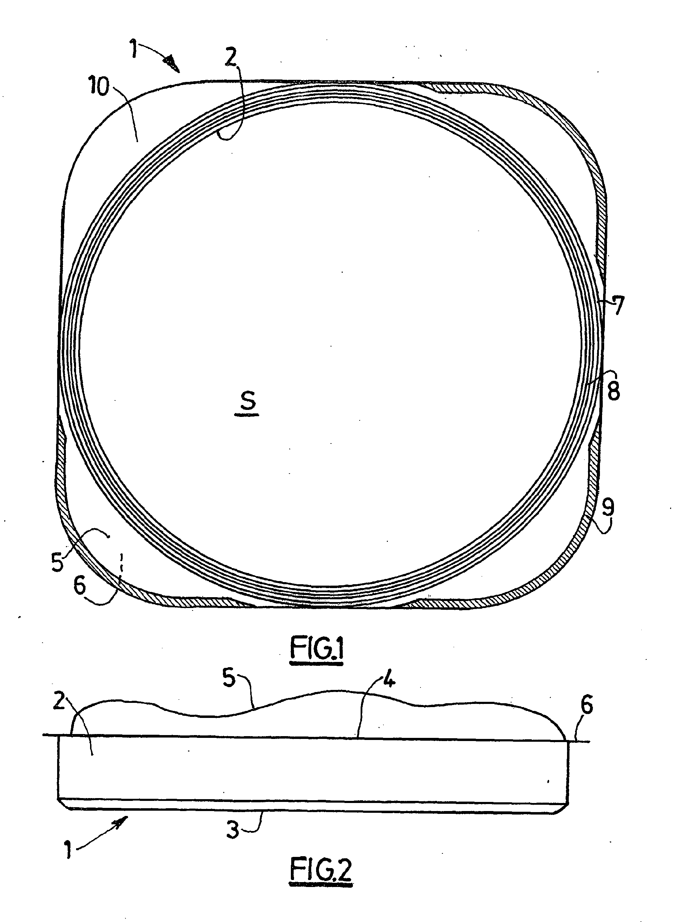

On voit aux figures 1 et 2 un emballage pour produits alimentaires, destiné par exemple à la conservation et la commercialisation de pizzas saupoudrées de fromage râpé, ou de tous autres produits de ce type tels que roulés, croque-monsieur, croissants, etc.

Cet emballage est composé d'un conteneur 1 généralement cylindrique comprenant une paroi latérale 2 cylindrique et un fond 3. La section 4 opposée au fond 3 est ouverte. Le conteneur 1 est réalisé en matière plastique rigide thermoformée.

Cette ouverture est fermée par un opercule 5 constitué d'un film en matière plastique.

L'opercule 5 est ici déformé en forme de dôme sous l'effet de la chaleur et de la surpression régnant dans le conteneur lors de la mise en place de l'opercule.

L'ouverture 4 du conteneur 1 est dotée d'un rebord 6 parallèle au fond 3.

L'opercule 5 est soudé au rebord 6 le long de deux cordons de soudure parallèles périphériques, un cordon de soudure extérieur 7 et un cordon de soudure intérieur 8. Les cordons de soudure périphériques 7 et 8 sont ici circulaires.

Leur largeur est par exemple de l'ordre de 1,5 mm et leur espacement d'environ 5 mm.

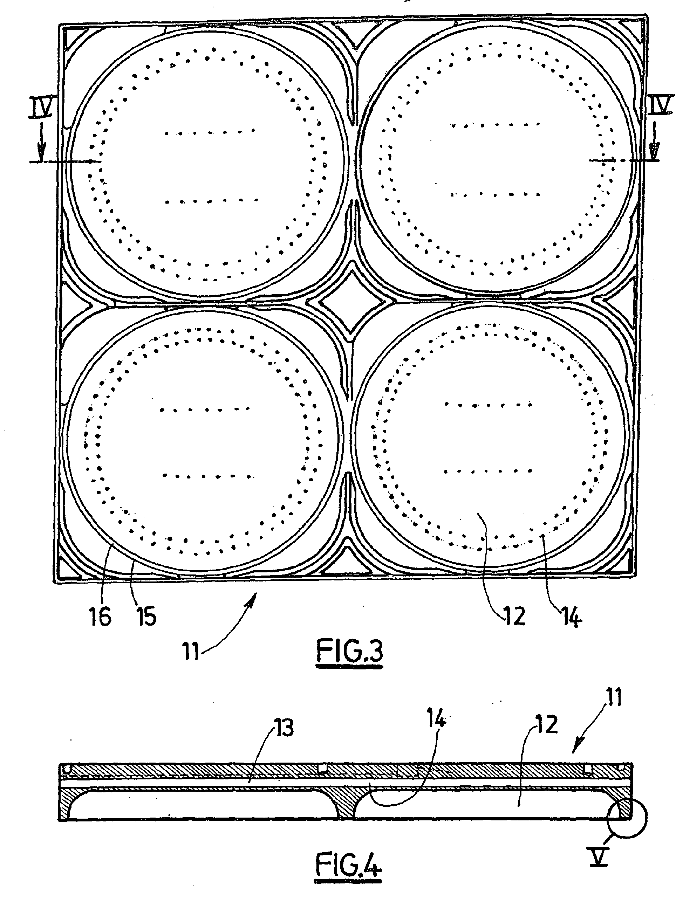

Le rebord 6 a une forme généralement carrée à coins arrondis. Le film 5 possède en plan la même forme. Ses coins sont en outre soudés au bord des coins du rebord par des soudures annexes 9 pour éviter leur soulèvement lors du transport du stockage. Seul l'un des coins 10 de l'opercule 5 n'est pas soudé pour faciliter sa préhension lors de l'ouverture de l'emballage.
On voit aux figures 3 et 4 un outil 11 permettant de réaliser les soudures 7 et 8.

Cet outil est généralement plan et comporte quatre alvéoles 12 en forme de dôme pour fermer simultanément quatre conteneurs 1.

Il est muni de moyens de chauffage non représentés permettant de l'élever à une température convenable pour le soudage du film de l'opercule 5 sur les rebords 6 des conteneurs 1.

L'outil 11 est en outre traversé par des canaux d'aspiration 13 reliés à l'intérieur des dômes 12 par des orifices 14.

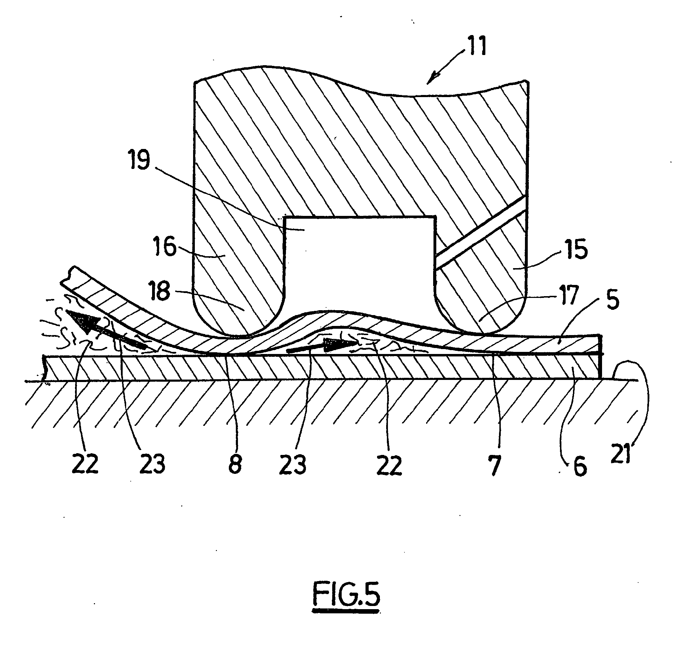

Si l'on se réfère maintenant à la figure 5, on voit que la périphérie d'un dôme 12 comporte deux lèvres de soudage, à savoir une lèvre extérieure 15 et une lèvre intérieure 16. Les lèvres 15 et 16 sont circulaires et concentriques.

Les lèvres 15 et 16 ont par exemple une épaisseur de l'ordre de 1,5 mm et leurs bords 17 et 18 respectivement sont en forme de tores à section semi-circulaire.

La distance entre les lèvres 15 et 16 est par exemple de l'ordre de 5 mm, et elles délimitent entre elles une rainure 19 dont la profondeur peut être de l'ordre de 2 mm.

Des évents 20 sont percés dans la lèvre extérieure 15 pour permettre à l'air en surpression dans le conteneur de s'échapper.

Pour réaliser les soudures 7 et 8, les rebords 6 des conteneurs 1 sont appliqués sur une surface convenable 21 sous l'outil 11.

Le film 5 est disposé sur les conteneurs 1 et l'outil 11 est abaissé de sorte que les lèvres 15 et 16 provoquent le soudage du film 5 sur le rebord 6 le long des cordons de soudure 7 et 8.

Si un débris 22 tel qu'un morceau de fromage râpé est présent entre le rebord 6 et le film 5 à un emplacement de soudage, la chaleur l'amène à se ramollir ou à fondre et ainsi à fluer comme montré par les flèches 23, soit vers l'extérieur (cas non représenté), soit vers l'intérieur de l'emballage, soit dans le réservoir formé entre le film 5 et le rebord 6 entre les cordons de soudures 7 et 8.

La formation et le gonflement de ce réservoir sont favorisés par la dépression dans la rainure 19 provoquée par les évents 20.

## Revendications

1. Procédé de fermeture d'un conteneur (1) réalisé en matière thermoplastique thermoformée et muni d'un rebord périphérique, (6) à l'aide d'un opercule (5) réalisé en matière thermoplastique souple, ledit conteneur contenant un produit alimentaire comprenant des éléments (22) en matériau thermofusible susceptibles de s'en détacher, avec les étapes consistant à :
- placer ledit opercule sur ledit conteneur ;
- former simultanément deux cordons de soudure périphériques (7, 8) sensiblement parallèles, entre le rebord et l'opercule, de manière à former un réservoir entre le film et le rebord, entre les cordons de soudure ; et
- faire fondre un élément (22) répandu sur le rebord du conteneur à l'emplacement d'un cordon de soudure, et en faire fluer au moins une partie vers ledit réservoir.

2. Procédé d'emballage d'un produit alimentaire comprenant des éléments (22) en matériau thermofusible susceptibles de s'en détacher, **caractérisé par le fait qu'**il comprend les étapes consistant à :
- placer ledit produit alimentaire dans un conteneur (1) réalisé en matière thermoplastique thermoformée et muni d'un rebord périphérique ;
- fermer ledit conteneur par un procédé selon la revendication 1.

3. Outil de soudage pour la mise en oeuvre d'un procédé selon l'une quelconque des revendications 1 et 2, avec deux lèvres de soudage périphériques (15, 16) sensiblement parallèles délimitant entre elles une rainure (19) de stockage charactérisé par le fait que des évents (20) sont percés dans la lèvre extérieure (15).

4. Outil selon la revendication 3, dans lequel les lèvres de soudage sont espacées d'une distance comprise entre 2 et 10 mm, de préférence de l'ordre de 5 mm.

5. Outil selon l'une quelconque des revendications 3 et 4, dans lequel la rainure à une profondeur comprise entre 0, 5 et 5 mm, de préférence de l'ordre de 2 mm.

6. Outil selon l'une quelconque des revendications 3 à 5, dans lequel l'une au moins des lèvres de soudage a une section transversale semi-circulaire.

7. Ensemble constitué d'un produit alimentaire emballé et de son emballage, ledit produit alimentaire comprenant des éléments (22) en matériau thermofusible susceptibles de s'en détacher, **caractérisé par le fait qu'**il est obtenu par un procédé selon l'une quelconque des revendications 1 et 2.

## Claims

1. Sealing procedure for a container (1) made from thermo-formed thermoplastic and fitted with a peripheral edge (6) using an lid (5) made from flexible thermoplastic material, the said container containing a food product comprising elements (22) in thermo fusible matter which is likely to become detached, with stages comprising:
- placing the said lid on the said container
- simultaneously forming two peripheral welding bands (7, 8) which are virtually parallel, between the edge and the lid so as to form a holder between the film and the edge, between the welding bands; and
- to weld an element (22) extended over the edge of the container in the location of a welding band and to make at least a part of it flow towards the said holder.

2. Packaging procedure for a food product comprising elements (22) in a thermo fusible matter likely to become detached, **characterised by** the fact that it comprises stages consisting of:
- placing the said food product in a container (1) made from thermo-formed thermoplastic material and fitted with a peripheral edge;
- close the said container by a procedure according to claim 1.

3. Welding tool to implement a procedure according to either of claims 1 and 2 with two peripheral welding lips (15, 16) virtually parallel between them marking out a storage groove (19) **characterised by** the fact that the channels (20) are pierced into the outer lip (15).

4. Tool according to claim 3, in which the spaces between the welding lips are between 2 and 10mm, preferably 5mm.

5. Tool according to either of claims 3 and 4 in which the depth of the groove is between 0.5 and 5mm preferably 2mm.

6. Tool according to any of claims 3 to 5 in which at least one of the welding lips has a semi-circular transverse section.

7. Assembly formed from a packaged food product and its packaging, the said food product comprising elements (22) in thermo fusible matter which is likely to become detached **characterised by** the fact that it is obtained by a procedure according to either of claims 1 and 2.

## Patentansprüche

1. Verfahren zum Verschließen eines Behälters (1), der aus einem warmverformten thermoplastischen Werkstoff hergestellt und mit einem umlaufenden Rand (6) versehen ist, mit Hilfe eines Schutzdeckels (5), das aus elastischem thermoplastischen Werkstoff hergestellt ist, wobei der Behälter ein Lebensmittelprodukt enthält, das in der Wärme schmelzflüssig werdende Elemente (22) umfasst, die davon lösbar sind, unter Einsatz der folgenden Arbeitsschritte:
- Aufsetzen des Schutzdeckels auf den Behälter;
- gleichzeitiges Ausbilden von zwei umlaufenden, im Wesentlichen parallelen Schweißnähten (7, 8) zwischen dem Rand und dem Schutzdeckel in der Weise, dass zwischen der Folie und dem Rand zwischen den Schweißnähten ein Behälter gebildet wird; und
- Veranlassen des Schmelzens eines auf dem Rand des Behälters an der Stelle einer Schweißnaht aufgetragenen Elements (22), wobei man zumindest einen Teil zu dem Behälter hin fließen lässt.

2. Verfahren zum Verpacken eines Lebensmittelprodukts, welches in der Wärme schmelzflüssig werdende Elemente (22) umfasst, welche sich davon lösen können, **dadurch gekennzeichnet, dass** es die folgenden Arbeitsschritte umfasst:
- Einbringen des Lebensmittelprodukts in einen Behälter (1), der aus einem warmverformten thermoplastischen Werkstoff hergestellt und mit einem umlaufenden Rand versehen ist; und
- Verschließen des Behälters mittels eines Verfahrens nach Anspruch 1.

3. Schweißwerkzeug zur Durchführung eines Verfahrens nach einem der Ansprüche 1 und 2, mit zwei im Wesentlichen parallelen umlaufenden Schweißlippen (15, 16), welche zwischen sich eine Nut (19) zur Speicherung begrenzen, **dadurch gekennzeichnet, dass** in die außen liegende Lippe Entlüftungsöffnungen (20) eingebohrt sind.

4. Werkzeug nach Anspruch 3, bei welchem die Schweißlippen um eine Distanz von einander beabstandet sind, die zwischen 2 und 10 mm beträgt und vorzugsweise in der Größenordnung on 5 mm liegt.

5. Werkzeug nach einem der Ansprüche 3 und 4, bei welchem die Nut eine Tiefe besitzt, die zwischen 0,5 und 5 mm beträgt und vorzugsweise in der Größenordnung von 2 mm liegt.

6. Werkzeug nach einem der Ansprüche 3 bis 5, bei welchem zumindest eine der Schweißlippen einen halbkreisförmigen Querschnitt aufweist.

7. Verbund, der aus einem verpackten Lebensmittelprodukt und dessen Verpackung besteht, wobei das Lebensmittelprodukt in der Wärme schmelzflüssig werdende Elemente (22) umfasst, die davon lösbar sind, **dadurch gekennzeichnet, dass** er mittels eines Verfahrens nach einem der Ansprüche 1 und 2 gebildet wurde.
